# EUROPEAN PATENT SPECIFICATION

(11) **EP 3 770 309 B1**
(45) Date of publication and mention of the grant of the patent: **09.08.2023**
(21) Application number: 19770909.0
(22) Date of filing: 12.03.2019
(51) Int. Cl.: D02G 3/28, D02G 3/36, D02G 3/44, D06M 15/41, D06M 15/693, F16G 1/08, F16G 1/28, F16G 5/06, F16G 5/20, D06M 101/36, D02G 3/48

(54) **CORD FOR RUBBER REINFORCEMENT, METHOD FOR PRODUCING SAME, AND RUBBER PRODUCT**
SEIL ZUR GUMMIVERSTÄRKUNG, VERFAHREN ZUR HERSTELLUNG DESSELBEN UND GUMMIPRODUKT
CÂBLE POUR RENFORCEMENT DE CAOUTCHOUC, SON PROCÉDÉ DE PRODUCTION, ET PRODUIT EN CAOUTCHOUC

(30) Priority: 19.03.2018 JP 2018050533
(43) Date of publication of application: 27.01.2021
(73) Proprietor: NIPPON SHEET GLASS COMPANY, LIMITED, Tokyo 108-6321 (JP)
(72) Inventor: SHIMOKAWA, Kosei, Tokyo 108-6321 (JP)
(74) Representative: Cabinet Beau de Loménie
(86) International application number: PCT/JP2019/010052
(87) International publication number: WO 2019/181654

(56) References cited:
- EP-A1- 1 762 654
- EP-A1- 3 088 601
- WO-A1-2005/098123
- WO-A1-2017/183660
- WO-A1-2017/183660
- JP-A- S 632 701
- JP-A- H01 118 639
- JP-A- H06 207 380
- JP-A- H08 150 809
- JP-A- S62 251 201
- JP-A- 2001 080 316
- JP-A- 2016 223 057
- JP-A- 2016 223 057
- US-A- 5 595 284

## Description

### TECHNICAL FIELD

The present invention relates to a rubber-reinforcing cord, a method for producing the rubber-reinforcing cord, and a rubber product.

### BACKGROUND ART

Rubber-reinforcing cords including strong fibers such as aramid fibers are widely used as reinforcing members in rubber products such as rubber belts and tires which are repeatedly subjected to bending stress. The rubber-reinforcing cords are required to have high bending fatigue resistance and high dimensional stability.

A rubber product including such a reinforcing cord may suffer fraying of the reinforcing cord on an edge surface of the rubber product. For example, a toothed belt, such as a timing belt typically used for driving a cam shaft of an internal combustion engine, poses a problem in that the belt has a reinforcing cord exposed on its side surface inevitably due to the production process, and the exposed portion of the reinforcing cord is likely to undergo fraying, leading to protrusion of the fibers from the edge surface of the belt. This can result in a defect such as a reduction in durability of the rubber product. Reinforcing cords resistant to fraying have therefore been pursued.

As a method for obtaining a rubber-reinforcing cord having an excellent anti-fraying property, Patent Literature 1, for example, discloses a method for producing an aramid fiber cord for reinforcing a rubber belt, the method including applying a water-soluble adhesive containing 5 to 50 mass% of carbon black in terms of mass ratio of solids to untwisted aramid fibers and then twisting the aramid fibers.

Patent Literature 2 discloses, for a rubber-reinforcing cord including a coating, a water-based treatment agent containing a rubber latex, a crosslinking agent, and a filler at a given mix proportion as a treatment agent for forming the coating to improve the anti-fraying property of the rubber-reinforcing cord. Another rubber-reinforcing cord is disclosed in Patent Literature 3.

### CITATION LIST

### Patent Literature

Patent Literature 1: JP 2010-001570 A
Patent Literature 2: WO 2015/098105 A1
Patent Literature 3: JP 2016 223057 A

### SUMMARY OF INVENTION

### Technical Problem

In recent years, rubber products such as rubber belts are often used in an environment where a load higher than before is applied. Rubber-reinforcing cords including aramid fibers are used, for example, in accessory belts of vehicles. In Integrated Starter Generator (ISG) hybrid systems, for example, a load higher than before is applied to the belts. Conventional rubber-reinforcing cords including aramid fibers cannot withstand such a high load and suffer, for example, fraying, fracture, or elongation, which causes a problem such as breakage of belts.

It is therefore an object of the present invention to provide a rubber-reinforcing cord including aramid fibers and having not only an excellent anti-fraying property but also high tensile strength and an excellent anti-elongation property. Another object of the present invention is to provide a rubber product having high durability achieved by reinforcement with such a rubber-reinforcing cord.

### Solution to Problem

A first aspect of the present invention provides the rubber-reinforcing cord for reinforcing a rubber product according to claim 1.

A second aspect of the present invention provides a method for producing a rubber-reinforcing cord. The rubber-reinforcing cord is the rubber-reinforcing cord according to the above first aspect. The method according to the second aspect for producing the rubber-reinforcing cord includes the following step (I):
(I) assembling a plurality of filaments into the filament bundle; forming the first coating on at least the surface of the filament bundle to produce each of the strands; giving each of the strands primary twists at a primary twisting rate of 50 to 100 twists/m; assembling the at least three strands each given primary twists; and giving the at least three strands final twists at a final twisting rate of 120 to 200 twists/m.

A third aspect of the present invention provides a rubber product reinforced with the rubber-reinforcing cord according to the above first aspect.

### Advantageous Effects of Invention

The present invention can provide the rubber-reinforcing cord including aramid fibers and having not only an excellent anti-fraying property but also high tensile strength and an excellent anti-elongation property. Reinforced with such a rubber-reinforcing cord, the rubber product of the present invention can achieve high durability.

### BRIEF DESCRIPTION OF DRAWING

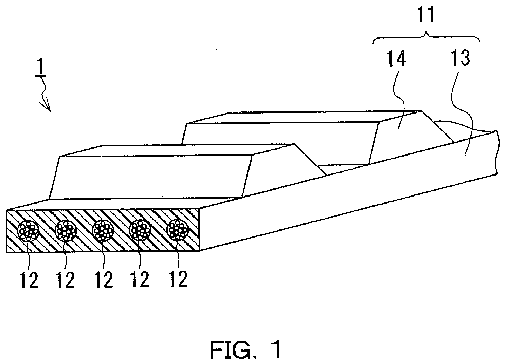

FIG. 1 schematically shows an example of a rubber product of the present invention.

### DESCRIPTION OF EMBODIMENTS

Hereinafter, embodiments of the present invention will be described in detail.

### [Rubber-reinforcing cord]

A rubber-reinforcing cord of the present embodiment is defined in claim 1 and is a cord for reinforcing a rubber product. The rubber-reinforcing cord includes at least three strands. Each of the strands included in the rubber-reinforcing cord includes at least one filament bundle and a first coating provided to cover at least a portion of the surface of the filament bundle. The filament bundle consists essentially of aramid fiber filaments. The mass of the first coating is in the range of 14 to 25% with respect to the mass of the filament bundle. Each of the strands included in the rubber-reinforcing cord is given primary twists at a primary twisting rate of 50 to 100 twists/m. The at least three strands each given primary twists are assembled and given final twists at a final twisting rate of 120 to 200 twists/m.

Hereinafter, the reinforcing cord of the present embodiment will be described in more detail.

In the rubber-reinforcing cord of the present embodiment, the filament bundle composing the strand includes a plurality of filaments. As previously described, the filament bundle consists essentially of aramid fiber filaments. Saying that the filament bundle consists essentially of aramid fiber filaments herein means that the filament bundle may include filaments other than the aramid fiber filaments to the extent that the other filaments have no significant influence on the effects of the invention. Specifically, the filament bundle may include filaments other than the aramid fiber filaments in such a proportion that the cross-sectional area of the other filaments accounts for 10% or less (e.g., 5% or less or 1% or less) of the total cross-sectional area of the filament bundle. The filaments other than the aramid fiber filaments can be filaments of fibers commonly used as fibers of rubber-reinforcing cords. The filament bundle may consist of the aramid fiber filaments.

The type of the aramid fiber filaments is not particularly limited. It does not matter whether the aramid fibers used are para-aramid fibers or meta-aramid fibers. Aramid fibers of a copolymer formed from a meta-aramid monomer and a para-aramid monomer may also be used. Examples of commercially-available aramid fibers include: polyparaphenylene terephthalamide fibers (such as Kevlar manufactured by DU PONT-TORAY CO., LTD. and Twaron manufactured by TEIJIN LIMITED) which are para-aramid fibers; polymetaphenylene isophthalamide fibers (such as Conex manufactured by TEIJIN LIMITED) which are meta-aramid fibers; and poly-3,4'-oxydiphenylene terephthalamide copolymer fibers (such as Technora manufactured by TEIJIN LIMITED) which are copolymer fibers. The fiber diameter of the aramid fiber filaments is not particularly limited.

The number of the filaments included in the filament bundle is not particularly limited. The filament bundle can include, for example, 60 to 5000 filaments.

The surfaces of the filaments may be treated with a sizing agent. That is, the surfaces of the filaments may be subjected to a pretreatment commonly called "sizing". For example, a preferred sizing agent for aramid fibers contains at least one functional group selected from the group consisting of an epoxy group and an amino group. Examples of such a sizing agent include aminosilanes, epoxysilanes, novolac epoxy resins, bisphenol A epoxy resins, bisphenol F epoxy resins, brominated epoxy resins, bisphenol AD epoxy resins, and glycidyl amine epoxy resins. Specific examples include Denacol series available from Nagase ChemteX Corporation, EPICLON series available from DIC Corporation, and Epikote series available from Mitsubishi Chemical Corporation. The use of aramid fiber filaments having their surfaces subjected to sizing can enhance the adhesion between a matrix rubber and the rubber-reinforcing cord. Coatings (sizing agent coatings) formed of the sizing agent on the surfaces of the filaments by the pretreatment of the filaments are different from the first coating, as defined in the present embodiment, covering at least a portion of the surface of the filament bundle, and are not included in the first coating defined in the present embodiment.

The number of filament bundles included in each of the strands of the rubber-reinforcing cord is not particularly limited, and may be one or may be two or more. The filament bundle may include a plurality of filament bundles assembled together. In this case, each of the plurality of filament bundles may be twisted or untwisted. The plurality of filament bundles in one bundle may be twisted together or may be untwisted.

The first coating is provided to cover at least a portion of the surface of the filament bundle. The first coating may be provided directly on the surface of the filament bundle, or may cover the surface of the filament bundle with another layer interposed therebetween. The rubber-reinforcing cord of the present embodiment may or may not be provided with other coating than this first coating.

The first coating is formed by providing a first treatment agent on at least a portion of the surface of the filament bundle and drying the first treatment agent by heat treatment. The first treatment agent can be provided on the surface of the filament bundle, for example, by impregnating the filament bundle with the first treatment agent, or by applying the first treatment agent to at least a portion of the surface of the filament bundle. This heat treatment almost completely removes water included in the filaments themselves and a solvent (e.g., water) of the water-based treatment agent. The method for providing the first treatment agent to the filament bundle and the method for drying the first treatment agent are not particularly limited. The first treatment agent is preferably provided so that the inside of the filament bundle will be impregnated with the treatment agent.

The first coating is a coating including a resorcinol resin, a non-resorcinol phenolic compound-formaldehyde condensate, and a rubber component. The term "non-resorcinol phenolic compound" will be hereinafter simply referred to as "phenolic compound". When the first coating includes the resorcinol resin, the phenolic compound-formaldehyde condensate, and the rubber component, the adhesion between the filaments is enhanced and the adhesion between the rubber-reinforcing cord embedded in a rubber product such as a belt and a matrix rubber in the rubber product is also enhanced.

The first coating may consist essentially of the resorcinol resin, the phenolic compound-formaldehyde condensate, and the rubber component, or may consist only of the resorcinol resin, the phenolic compound-formaldehyde condensate, and the rubber component. Saying that the coating consists essentially of the resorcinol resin, the phenolic compound-formaldehyde condensate, and the rubber component herein means that the total amount of these components is 50 mass% or more and desirably 70 mass% or more of the coating.

The resorcinol resin is a resorcinol-formaldehyde condensate (RF). The resorcinol-formaldehyde condensate is not particularly limited. A resol-type RF obtained by a reaction of resorcin and formaldehyde under the presence of an alkaline catalyst such as an alkali hydroxide or an amine, a novolac-type RF obtained by a reaction of resorcin and formaldehyde under the presence of an acid catalyst, and the like can be suitably used. A mixture of a resol-type RF and a novolac-type RF may be used. In particular, an RF obtained by a reaction of resorcin (R) and formaldehyde (F) at a molar ratio R:F of 2:1 to 1:3 is preferably used. For example, the first coating preferably includes 2 mass% or more and more preferably 5 mass% or more of the RF component. The first coating includes, for example, 2 to 20 mass% of the RF component.

The phenolic compound-formaldehyde condensate is not particularly limited. The term "phenolic compound" as used herein means an aromatic hydrocarbon (benzene or naphthalene) substituted at least by a hydroxyl group (-OH). Examples of the phenolic compound include phenols (monovalent phenols), divalent phenols, halogenated phenols, alkylphenols, nitrophenol, phenolsulfonic acid, and naphthol. Examples of the divalent phenols include catechol and hydroquinone. Examples of the halogenated phenols include chlorophenol and bromophenol. Examples of the alkylphenols include cresol and butylphenol. As described previously, the term "phenolic compound" does not include resorcinol. A resol-type condensate obtained by a reaction of the phenolic compound and formaldehyde under the presence of an alkaline catalyst such as an alkali hydroxide or an amine, a novolac-type condensate obtained by a reaction of the phenolic compound and formaldehyde under the presence of an acid catalyst, and the like can be suitably used. A mixture of a resol-type condensate and a novolac-type condensate may be used. For example, the first coating preferably includes 10 mass% or more and more preferably 20 mass% or more of the phenolic compound-formaldehyde condensate. The first coating includes, for example, 10 to 50 mass% of the phenolic compound-formaldehyde condensate component.

The rubber component includes at least one selected from the group consisting of, for example, chlorosulfonated polyethylene rubber, nitrile rubber, hydrogenated nitrile rubber, carboxyl-modified nitrile rubber (X-NBR), carboxyl-modified hydrogenated nitrile rubber (X-HNBR), butadiene-styrene copolymer latex, dicarboxylated butadiene-styrene copolymer rubber, vinylpyridine-styrene-butadiene terpolymer rubber, isoprene rubber, chloroprene rubber, acrylonitrile-butadiene copolymer rubber, hydrogenated acrylonitrile-butadiene copolymer rubber, and ethylene-propylene-non-conjugated diene terpolymer rubber. The rubber component preferably includes carboxyl-modified hydrogenated nitrile rubber. For example, the rubber component preferably includes 40 mass% or more and more preferably 50 mass% or more of carboxyl-modified hydrogenated nitrile rubber. The first coating preferably includes 40 to 80 mass% of the rubber component.

The first coating may include a component other than the components mentioned above as examples. Examples of the other component include a stabilizer, a thickener, and an anti-aging agent.

The mass of the first coating is in the range of 14 to 25% with respect to the mass of the filament bundle. When the mass of the first coating is 14% or more with respect to the mass of the filament bundle, the adhesion between the filaments is enhanced and thus the anti-fraying property of the rubber-reinforcing cord can be improved. Specifically, when the first treatment agent is provided to the filament bundle so that the mass of the first coating will be 14% or more with respect to the mass of the filament bundle, a reaction of the treatment agent occurs in the filament bundle sufficiently impregnated with the treatment agent, resulting in enhancement of the adhesion between the filaments. The mass of the first coating is preferably 15% or more and more preferably 16% or more with respect to the mass of the filament bundle in order to further improve the anti-fraying property of the rubber-reinforcing cord. If the proportion of the mass of the first coating to the mass of the filament bundle is too high, a defect such as a decrease in dimensional stability in a rubber product or a decrease in elastic modulus of the rubber-reinforcing cord can occur. Therefore, the mass of the first coating is 25% or less, preferably 24% or less, and more preferably 23% or less with respect to the mass of the filament bundle.

The strand is given primary twists at a primary twisting rate of 50 to 100 twists/m. When the primary twisting rate is 50 twists/m or more, the flexibility of the rubber-reinforcing cord increases to improve the bending fatigue resistance and the twisting angle increases to decrease the length of the filaments exposed on an edge surface. This makes fraying of the cord unlikely. The primary twisting rate is preferably 55 twists/m or more and more preferably 60 twists/m or more to further improve the anti-fraying property. Too high a twisting rate can result in excessive elongation of the cord in some cases. Such a problem is unlikely to occur when the primary twisting rate is 100 twists/m or less and preferably 90 twists/m or less.

At least three such strands each given primary twists are assembled and given final twists at a final twisting rate of 120 to 200 twists/m. When the final twisting rate is 120 twists/m or more, the flexibility of the rubber-reinforcing cord increases to improve the bending fatigue resistance and the twisting angle increases to decrease the length of the filaments exposed on an edge surface. This makes fraying of the cord unlikely. The final twisting rate is preferably 135 twists/m or more, more preferably 140 twists/m or more, even more preferably more than 160 twists/m, and most preferably 165 twists/m or more to further improve the anti-fraying property. Too high a twisting rate can result in excessive elongation of the cord in some cases. Such a problem is unlikely to occur when the final twisting rate is 200 twists/m or less and preferably 180 twists/m or less.

In the rubber-reinforcing cord of the present embodiment, three or more strands each given primary twists are assembled and given final twists. As described above, the strands in the rubber-reinforcing cord of the present embodiment are twisted at high twisting rates. High twisting rates can result in elongation of the cord and a decrease in the tensile strength of the cord. However, in the present embodiment, the three or more strands each given primary twists are assembled and given final twists, and that allows prevention of excessive elongation of the cord and achievement of high tensile strength. Giving final twists to too large a number of strands makes the diameter of the cord so large that a problem can occur. The problem is, for example, that the thickness of, for example, a belt in which the cord is embedded needs to be large enough, that is, a rubber product needs to be large enough for the rubber-reinforcing cord. For this reason, the number of strands given final twists is, for example, four or less.

Lang lay may be employed in which the direction of primary twists and the direction of final twists are the same, or regular lay may be employed in which the direction of primary twists and the direction of final twists are opposite. The directions of the twists are not limited and may be the S direction or the Z direction.

To enhance the adhesion to the matrix rubber, the rubber-reinforcing cord of the present embodiment may further include a second coating provided outside (or nearer to the outer surface of the rubber-reinforcing cord than) the first coating. The second coating may be formed of the same material as or a different material from that of the first coating. For example, components and a solvent of a second treatment agent for forming the second coating may be different from or the same as those of the first treatment agent for forming the first coating. The second treatment agent may include, for example, a commercially-available adhesive, and may further include an organic solvent. Specific examples of the commercially-available adhesive include Chemlok 233X (manufactured by Lord Far East Incorporated), THIXON series (manufactured by Dow Chemical Company Japan), MEGUM series (manufactured by Dow Chemical Company Japan), and METALOC series (manufactured by TOYOKAGAKU KENKYUSHO CO., LTD.).

As previously mentioned, the rubber-reinforcing cord of the present embodiment may further include the second coating provided outside the first coating. The second coating may be formed by: providing the second treatment agent for forming the second coating to the cord formed by giving final twists to the three or more strands each given primary twists; and drying the second treatment agent on the cord with a load (e.g., 40 to 300 N) applied to the cord in the length direction of the cord. It is preferable that the whole process from provision of the second treatment agent for forming the second coating to the cord including the plurality of strands twisted together to drying of the treatment agent on the cord be performed with a load applied to the cord in the length direction of the cord.

### [Method for producing rubber-reinforcing cord]

An example of the method of the present embodiment for producing a rubber-reinforcing cord will be described hereinafter. The matters specified above for the rubber-reinforcing cord of the present embodiment are applicable to the production method described hereinafter, and redundant descriptions of the matters may thus be omitted. The matters specified for the production method described hereinafter are applicable to the rubber-reinforcing cord of the present embodiment. The following will describe an example of the method for producing a rubber-reinforcing cord, the method including steps (I) and (II). The step (II) does not have to be performed for production of a rubber-reinforcing cord provided with no second coating.

An example of the method of the present embodiment for producing a rubber-reinforcing cord includes the steps (I) and (II) described hereinafter:
(I) assembling a plurality of filaments into the filament bundle; providing the first treatment agent to at least a portion of the surface of the filament bundle and drying the first treatment agent to produce each of the strands including the first coating formed on the surface of the filament bundle; giving each of the strands primary twists at a primary twisting rate of 50 to 100 twists/m; assembling the at least three strands each given primary twists; and giving the at least three strands final twists at a final twisting rate of 120 to 200 twists/m; and
(II) providing the second treatment agent to the cord obtained in the step (I); and drying the second treatment agent on the cord, with a 10 to 300 N tension applied to the cord in the length direction of the cord to which the second treatment agent has been provided, to form the second coating provided outside the first coating.

In the step (I), a plurality of filaments is assembled into the filament bundle, and the first treatment agent used to produce the first coating is prepared. Aramid fiber filaments are used as the filaments to produce a filament bundle consisting essentially of aramid fiber filaments. The first treatment agent is prepared in accordance with the composition of (components in) the first coating intended to be formed. In the case where the first coating intended to be formed includes the resorcinol resin, the phenolic compound-formaldehyde condensate, and the rubber component, the first treatment agent includes the resorcinol resin, the phenolic compound-formaldehyde condensate, the rubber component (rubber latex), and a solvent.

Next, the first treatment agent is provided to at least a portion of the surface of the filament bundle. Then, the first treatment agent on the filament bundle is dried, that is, heat treatment for removing the solvent in the first treatment agent is performed. The strand including the first coating formed on at least a portion of the surface of the filament bundle can thus be obtained. The method for providing the first treatment agent to at least a portion of the surface of the filament bundle is not limited. For example, the first treatment agent may be applied to the surface of the filament bundle, or the filament bundle may be immersed in the first treatment agent. The conditions for the heat treatment for removing the solvent in the first treatment agent are not particularly limited. The temperature of the heat treatment is, for example, 100 to 150°C. The heat treatment time is, for example, 1 to 5 minutes.

Next, the strand obtained is given primary twists in one direction. The direction of the twists may be the S direction or the Z direction. The primary twisting rate for the strand is as specified above and thus will not be repeatedly described.

Next, at least three such strands given primary twists are assembled and given final twists. The direction of the final twists may be the same as or different from the direction of the primary twists. The final twisting rate for the strands is as previously described and will therefore not be described again.

The twisting method employed is, for example, a ring method or a flyer method. The flyer method is suitably used. In the flyer method, the cord is wound with a tension applied thereto. As a result, elongation of the resulting cord is reduced, and a decrease in apparent diameter of the resulting cord can increase the end count. The increase in the end count decreases a load applied to each cord and thus can achieve further improvement of the anti-fraying property. The end count refers to the number of the rubber-reinforcing cords capable of being disposed in a rubber product. The end count refers to, for example, in the case of disposing the rubber-reinforcing cord in a belt having a given width, the number of the rubber-reinforcing cords capable of being disposed in the belt.

The step (II) will be described. In the step (II), the second treatment agent for forming the second coating is provided to the cord obtained in the step (I), and then the second treatment agent on the cord is dried with a 10 to 300 N tension applied to the cord in the length direction of the cord. The second coating provided outside the first coating is thus formed. The second coating may be formed directly on the first coating. By drying the second treatment agent on the cord with a tension in the above range applied to the cord in the length direction of the cord, a tight rubber-reinforcing cord can be obtained. This is because a high tension is applied to the cord and exerts a large effect on tightening of the rubber-reinforcing cord. Performing the drying with a drying oven will exert a larger effect on tightening of the rubber-reinforcing cord since heat, together with a tension in the above range, is applied to the cord. The tighter rubber-reinforcing cord has higher binding strength between the filaments and/or between the strands and has a further improved anti-fraying property. Moreover, elongation of the resulting cord is reduced, and a decrease in apparent diameter of the resulting cord can increase the end count. The increase in the end count decreases a load applied to each cord and thus can achieve further improvement of the anti-fraying property. The anti-fraying property is further improved also from this point of view.

The tension applied to the cord during the drying of the second treatment agent on the cord is preferably 10 N or more and more preferably 40 N or more to further improve the anti-fraying property. At the same time, the tension applied to the cord is preferably 300 N or less and more preferably 200 N or less in view of the tensile strength of the cord.

### [Rubber product]

A rubber product of the present embodiment is a rubber product reinforced with the rubber-reinforcing cord of the present embodiment. That is, the rubber product of the present embodiment includes a rubber composition (matrix rubber) and the rubber-reinforcing cord of the present embodiment embedded in the rubber composition. The rubber product is not limited to a particular type. Examples of the rubber product of the present embodiment include tires of automobiles or bicycles and transmission belts. Examples of the transmission belts include synchronous transmission belts and friction transmission belts. Examples of the synchronous transmission belts include toothed belts typified by timing belts for automobiles. Examples of the friction transmission belts include flat belts, round belts, V belts, and V-ribbed belts. That is, the rubber product of the present embodiment may be a toothed belt, a flat belt, a round belt, a V belt, or a V-ribbed belt.

The rubber product of the present embodiment is formed by embedding the rubber-reinforcing cord of the present embodiment in a rubber composition. The technique for embedding the rubber-reinforcing cord in the matrix rubber is not particularly limited, and a commonly-known technique may be employed. The rubber product of the present embodiment thus formed has high bending fatigue resistance and durability. The rubber product of the present embodiment is therefore particularly suitable for use, for example, as a timing belt of a vehicle engine.

The rubber of the matrix rubber is not limited to a particular type. The rubber may be, for example, chloroprene rubber, chlorosulfonated polyethylene rubber, ethylene propylene rubber, or hydrogenated nitrile rubber. The hydrogenated nitrile rubber may be one in which a zinc acrylate derivative (such as zinc methacrylate) is dispersed. At least one selected from hydrogenated nitrile rubber as such and hydrogenated nitrile rubber in which a zinc acrylate derivative is dispersed is preferable in view of water resistance and oil resistance. The matrix rubber may further include carboxyl-modified hydrogenated nitrile rubber. In view of adhesion, it is preferable for the coating of the rubber-reinforcing cord and the rubber composition of the rubber product to contain or to be formed of the same type of rubber.

FIG. 1 shows a toothed belt as one example of the rubber product. A toothed belt 1 shown in FIG. 1 includes a belt body 11 and a plurality of rubber-reinforcing cords 12. The belt body 11 includes a belt portion 13 and a plurality of tooth portions 14 arranged at regular intervals and protruding from the belt portion 13. The rubber-reinforcing cords 12 are embedded within the belt portion 13 so as to extend parallel to the length direction of the belt portion 13. Each rubber-reinforcing cord 12 is the rubber-reinforcing cord of the present embodiment.

### EXAMPLES

Hereinafter, the embodiments of the present invention will be described in more detail by way of Examples and Comparative Examples.

### [Production of rubber-reinforcing cord]

### (Examples 1 to 7)

First, 1000 untwisted aramid fiber filaments were assembled into a filament bundle. The aramid fiber filaments used were Technora 1670 dtex manufactured by TEIJIN LIMITED.

A treatment agent A (first treatment agent) having the composition shown in Table 1 below was applied to the filament bundle obtained. After that, the coating film formed of the treatment agent A on the filament bundle was dried by heat treatment at 200°C for 120 seconds to form a first coating. The filament bundle on which the first coating was formed (or the resulting strand) was given primary twists in one direction (primary twists in the Z direction) at the primary twisting rate shown in Table 3. Three such strands each given primary twists were assembled and then given final twists in the same direction (final twists in the Z direction) as that of the primary twists at the final twisting rate shown in Table 3.

Next, to enhance the adhesion to a matrix rubber, a treatment agent B (second treatment agent) having the composition shown in Table 2 below was applied to the first coating and was dried to form a second coating. In this step of forming the second coating, a tension was applied to the cord in the length direction of the cord over the period from the start of application of the treatment agent for forming the second coating to the completion of drying of the treatment agent for forming the second coating.

### (Comparative Examples 1 to 6)

Rubber-reinforcing cords of Comparative Examples 1 to 6 were produced according to the method for producing the above rubber-reinforcing cords of Examples 1 to 7, except that two strands each given primary twists were assembled and given final twists. The primary twisting rate and final twisting rate for the rubber-reinforcing cords of Comparative Examples 1 to 6 are shown in Table 3.

### (Comparative Examples 7 to 9)

Rubber-reinforcing cords of Comparative Examples 7 to 9 were produced according to the method for producing the above rubber-reinforcing cords of Examples 1 to 7. The primary twisting rate and final twisting rate for the rubber-reinforcing cords of Comparative Examples 7 to 9 are shown in Table 3.

**[Table 1]**

| Components in treatment agent A | Mass ratio of solids (%) |
|---|---|
| Resorcinol resin (*1) | 9 |
| Phenolic compound-formaldehyde condensate (*2) | 34 |
| Carboxyl-modified HNBR latex (*3) | 57 |

| | |
|---|---|
| (*1) SUMIKANOL 700 S by Sumitomo Chemical Co., Ltd. (*2) Yuka Resin KE 912-N by YOSHIMURA OIL CHEMICAL Co., Ltd. (*3) ZP 2230LX by Zeon Corporation | |

**[Table 2]**

| Components in treatment agent B | Proportion (parts by mass) |
|---|---|
| Chemlok 233X (*4) | 100 |
| Xylene | 100 |

| | |
|---|---|
| (*4) Manufactured by Lord Far East Incorporated | |

### [Method for evaluating anti-fraying property]

The anti-fraying property was evaluated for the rubber-reinforcing cords by the method described hereinafter.

First, the rubber-reinforcing cords of Examples and Comparative Examples were each cut into 200-mm-long pieces to obtain a sample of each of Examples and Comparative Examples. The sample was arranged on a surface of a matrix rubber precursor (H-NBR-type rubber) having a sheet shape (25 mm × 200 mm × 3 mm (thickness)) in such a manner that the length direction of the pieces of the sample and the length direction of the matrix rubber precursor were the same and that the adjacent pieces lie parallel to each other with no space therebetween. On the matrix rubber precursor was then stacked another sheet-shaped matrix rubber precursor having the same size in such a manner that the sample arranged as above was held between the precursors.

Next, the pair of precursors holding the sample therebetween was hot-pressed from both sides at 150°C for 20 minutes. The hot press turned the pair of matrix rubber precursors, which contained a vulcanizing agent, into a vulcanized matrix rubber, thus producing a rubber sample having the aramid fiber-including rubber-reinforcing cord sample embedded therein.

Subsequently, the rubber sample produced was cut parallel to the length direction of the sample with a cutting machine, and the condition of the edge surface of the cut sample was visually evaluated. The evaluation employed five ratings. The rating "5" was given when the cut surface was smooth and no aramid fibers frayed on the cut surface; the rating "4" was given when the cut surface was smooth but several aramid fibers frayed on the cut surface; the rating "3" was given when the cut surface was smooth, but several aramid fibers frayed on the cut surface and cracks were present between the strands; the rating "2" was given when the cut surface was smooth, but several tens of aramid fibers frayed and protruded from the cut surface or cracks were present between the strands and any strand as a whole protruded from the cut surface; and the rating "1" was given when even the smoothness of the cut surface was not obtained. The results are shown in Table 3.

### [Tensile strength and elongation rate at fracture]

For the rubber-reinforcing cords of Examples and Comparative Examples, the tensile strength was determined by pulling each rubber-reinforcing cord set in Autograph (AG-10 KNI manufactured by Shimadzu Corporation) at a pulling rate of 250 mm/min and measuring a load at the moment of fracture of the rubber-reinforcing cord. The elongation rate of each rubber-reinforcing cord at the moment of fracture of the rubber-reinforcing cord was determined as the elongation rate at fracture of the rubber-reinforcing cord. The results are shown in Table 3.

### [Deposit ratio of first coating]

The mass of the filament bundle of each of Examples and Comparative Examples and the mass of the filament bundle on which the first coating was formed (or the strand) were measured. The mass of the first coating was calculated from the measurement results. The proportion of the mass of the first coating to the mass of the filament bundle was calculated from the mass of the first coating and the mass of the filament bundle to determine the deposit ratio of the first coating. The results are shown in Table 3.

### [Deposit ratio of second coating]

The mass of the cord before the formation of the second coating (the cord composed of the three or two strands assembled together and given final twists) and the mass of the cord after the formation of the second coating were measured for the rubber-reinforcing cords of Examples and Comparative Examples. The mass of the second coating was calculated from the measurement results. The proportion of the mass of the second coating to the mass of the cord before the formation of the second coating were calculated from the mass of the second coating and the mass of the cord before the formation of the second coating to determine the deposit ratio of the second coating. The results are shown in Table 3.

**[Table 3]**

| | Number of strands | Primary twisting rate (twists/m) | Final twisting rate (twists/m) | Deposit ratio of first coating (%) | Deposit ratio of second coating (%) | Anti-fraying property | Tensile strength (N) | Elongation rate at fracture (%) |
|---|---|---|---|---|---|---|---|---|
| Example 1 | 3 | 74 | 150 | 18 | 6 | 4 | 653 | 4.4 |
| Example 2 | 3 | 74 | 150 | 18 | 6 | 5 | 711 | 4.2 |
| Example 3 | 3 | 74 | 150 | 18 | 6 | 5 | 683 | 4.0 |
| Example 4 | 3 | 74 | 150 | 18 | 6 | 5 | 684 | 3.8 |
| Example 5 | 3 | 74 | 165 | 18 | 6 | 5 | 558 | 4.3 |
| Example 6 | 3 | 60 | 129 | 15 | 6 | 4 | 813 | 4.3 |
| Example 7 | 3 | 70 | 150 | 15 | 6 | 5 | 748 | 4.1 |
| Comparative Example 1 | 2 | 40 | 131 | 10 | 10 | 1 | 608 | 4.3 |
| Comparative Example 2 | 2 | 40 | 131 | 3 | 10 | 1 | 654 | 4.4 |
| Comparative Example 3 | 2 | 40 | 131 | 13 | 7 | 1 | 581 | 4.1 |
| Comparative Example 4 | 2 | 40 | 131 | 15 | 9 | 2 | 568 | 3.9 |
| Comparative Example 5 | 2 | 40 | 131 | 18 | 6 | 3 | 549 | 3.8 |
| Comparative Example 6 | 2 | 40 | 131 | 23 | 7 | 3 | 539 | 3.9 |
| Comparative Example 7 | 3 | 74 | 150 | 13 | 7 | 4 | 635 | 4.8 |
| Comparative Example 8 | 3 | 112 | 129 | 19 | 5 | 4 | 535 | 4.0 |
| Comparative Example 9 | 3 | 50 | 107 | 15 | 6 | 2 | 945 | 4.4 |

The rubber-reinforcing cords of Examples 1 to 7 have an excellent anti-fraying property, which is demonstrated by the fact that the anti-fraying property is "4" or greater. Moreover, the rubber-reinforcing cords of Examples 1 to 7 have a high tensile property and an excellent anti-fraying property at the same time, which are demonstrated by the fact that the tensile strength is 550 N or more and the elongation rate at fracture is 4.5% or less. Meanwhile, the rubber-reinforcing cords of Comparative Examples 1 to 9 are unable to have all of an excellent anti-fraying property, high tensile strength, and an excellent anti-elongation property at the same time, which are demonstrated by the fact that the anti-fraying property is "3" or smaller and/or the tensile strength is less than 550 N and/or the elongation rate at fracture is more than 4.5%.

### INDUSTRIAL APPLICABILITY

The present invention can be applied to a rubber-reinforcing cord for reinforcing a rubber product and a rubber product including the rubber-reinforcing cord.

## Claims

1. A rubber-reinforcing cord (12) for reinforcing a rubber product (1), the rubber-reinforcing cord comprising: at least three strands, wherein
each of the strands comprises at least one filament bundle and a first coating provided to cover at least a portion of the surface of the filament bundle,
the filament bundle consists essentially of aramid fiber filaments,
the mass of the first coating is in the range of 14 to 25% with respect to the mass of the filament bundle, **characterized in that**
each of the strands is given primary twists at a primary twisting rate of 50 to 100 twists/m, and
the at least three strands each given primary twists are assembled and given final twists at a final twisting rate of 120 to 200 twists/m and **in that** the first coating comprises a resorcinol resin, a non-resorcinol phenolic compound-formaldehyde condensate, and a rubber component.

2. The rubber-reinforcing cord (12) according to claim 1, wherein the rubber component comprises at least one selected from the group consisting of chlorosulfonated polyethylene rubber, nitrile rubber, hydrogenated nitrile rubber, carboxyl-modified nitrile rubber, and carboxyl-modified hydrogenated nitrile rubber.

3. The rubber-reinforcing cord (12) according to claim 2, wherein the rubber component comprises carboxyl-modified hydrogenated nitrile rubber.

4. The rubber-reinforcing cord (12) according to any one of claims 1 to 3, further comprising a second coating provided outside the first coating.

5. A method for producing a rubber-reinforcing cord (12), wherein
the rubber-reinforcing cord is the rubber-reinforcing cord according to any one of claims 1 to 4, and
the production method comprises the following step (I):
(I) assembling a plurality of filaments into the filament bundle; providing a first treatment agent to at least a portion of the surface of the filament bundle and drying the first treatment agent to produce each of the strands comprising the first coating formed on the surface of the filament bundle; giving each of the strands primary twists at a primary twisting rate of 50 to 100 twists/m; assembling the at least three strands each given primary twists; and giving the at least three strands final twists at a final twisting rate of 120 to 200 twists/m.

6. A rubber product (1) reinforced by the rubber-reinforcing cord (12) according to any one of claims 1 to 4.

7. The rubber product (1) according to claim 6, being a rubber belt comprising matrix rubber and the rubber-reinforcing cord (12) embedded in the matrix rubber.

## Patentansprüche

1. Gummi-Verstärkungskord (12) zum Verstärken eines Gummiprodukts (1), wobei der Gummi-Verstärkungskord umfasst: zumindest drei Stränge, wobei
jeder der Stränge zumindest ein Filamentbündel und eine erste Beschichtung umfasst, die dazu vorgesehen ist, zumindest einen Abschnitt der Oberfläche des Filamentbündels zu bedecken,
das Filamentbündel im Wesentlichen aus Aramid-Faserfilamenten besteht,
die Masse der ersten Beschichtung in dem Bereich von 14 bis 25 % in Bezug auf die Masse des Filamentbündels liegt, **dadurch gekennzeichnet, dass**
jeder der Stränge mit einer Primärverdrillungsrate von 50 bis 100 Verdrillungen/m primärverdrillt wird, und
die zumindest drei Stränge, die jeweils primärverdrillt wurden, zusammengesetzt werden und mit einer Endverdrillungsrate von 120 bis 200 Verdrillungen/m endverdrillt werden, und dass die erste Beschichtung ein Resorcinol-Harz, ein Kondensat aus einer phenolischen Nicht-Resorcinol-Verbindung und Formaldehyd und eine Gummikomponente umfasst.

2. Gummi-Verstärkungskord (12) nach Anspruch 1, wobei die Gummikomponente zumindest eine umfasst, die aus der Gruppe bestehend aus chlorsulfoniertem Polyethylengummi, Nitrilgummi, hydrogeniertem Nitrilgummi, carboxyl-modifiziertem Nitrilgummi, und carboxyl-modifiziertem hydrogeniertem Nitrilgummi ausgewählt ist.

3. Gummi-Verstärkungskord (12) nach Anspruch 2, wobei die Gummikomponente carboxyl-modifizierten hydrogenierten Nitrilgummi umfasst.

4. Gummi-Verstärkungskord (12) nach einem der Ansprüche 1 bis 3, ferner umfassend eine zweite Beschichtung, die außerhalb der ersten Beschichtung vorgesehen ist.

5. Verfahren zur Herstellung eines Gummi-Verstärkungskords (12), wobei
der Gummi-Verstärkungskord der Gummi-Verstärkungskord nach einem der Ansprüche 1 bis 4 ist, und
das Herstellungsverfahren den folgenden Schritt (I) umfasst:
(I) Zusammenfügen von mehreren Filamenten zu dem Filamentbündel, Bereitstellen eines ersten Behandlungsmittels an zumindest einem Abschnitt der Oberfläche des Filamentbündels und Trocknen des ersten Behandlungsmittels, um jeden der Stränge so herzustellen, dass er die erste Beschichtung auf der Oberfläche des Filamentbündels ausgebildet umfasst, primäres Verdrillen eines jeden der Stränge mit einer primären Verdrillungsrate von 50 bis 100 Verdrillungen/m, Zusammenfügen der zumindest drei Stränge, die jeweils primär verdrillt sind, und Endverdrillen der zumindest drei Stränge mit einer Endverdrillungsrate von 120 bis 200 Verdrillungen/m.

6. Gummiprodukt (1), das durch den Gummi-Verstärkungskord (12) nach einem der Ansprüche 1 bis 4 verstärkt ist.

7. Gummiprodukt (1) nach Anspruch 6, wobei es sich um einen Gummiriemen umfassend Matrixgummi und den in den Matrixgummi eingebetteten Gummi-Verstärkungskord (12) handelt.

## Revendications

1. Câble de renforcement de caoutchouc (12) pour renforcer un produit en caoutchouc (1), le câble de renforcement de caoutchouc comprenant : au moins trois torons, dans lequel
chacun des torons comprend au moins un faisceau de filaments et un premier revêtement fourni pour recouvrir au moins une portion de la surface du faisceau de filaments,
le faisceau de filaments consiste essentiellement en filaments de fibres d'aramide,
la masse du premier revêtement se trouve dans l'intervalle de 14 à 25 % par rapport à la masse du faisceau de filaments, **caractérisé en ce que**
chacun des torons est doté de torsions primaires à un taux de torsion primaire de 50 à 100 torsions/m, et
les au moins trois torons dotés chacun de torsions primaires sont assemblés et dotés de torsions finales à un taux de torsion finale de 120 à 200 torsions/m et **en ce que** le premier revêtement comprend une résine de résorcinol, un condensat formaldéhyde de composé phénolique autre que le résorcinol, et un constituant de caoutchouc.

2. Câble de renforcement de caoutchouc (12) selon la revendication 1, dans lequel le constituant de caoutchouc comprend au moins un choisi dans le groupe consistant en caoutchouc de polyéthylène chlorosulfoné, caoutchouc de nitrile, caoutchouc de nitrile hydrogéné, caoutchouc de nitrile modifié par un carboxyle, et caoutchouc de nitrile hydrogéné modifié par un carboxyle.

3. Câble de renforcement de caoutchouc (12) selon la revendication 2, dans lequel le constituant de caoutchouc comprend un caoutchouc de nitrile hydrogéné modifié par un carboxyle.

4. Câble de renforcement de caoutchouc (12) selon l'une quelconque des revendications 1 à 3, comprenant de plus un second revêtement fourni à l'extérieur du premier revêtement.

5. Procédé pour la production d'un câble de renforcement de caoutchouc (12), dans lequel
le câble de renforcement de caoutchouc est le câble de renforcement de caoutchouc selon l'une quelconque des revendications 1 à 4, et
le procédé de production comprend l'étape (I) suivante :
(I) assemblage de plusieurs filaments en le faisceau de filaments ; fourniture d'un premier agent de traitement sur au moins une portion de la surface du faisceau de filaments et séchage du premier agent de traitement pour produire chacun des torons comprenant le premier revêtement formé sur la surface du faisceau de filaments ; dotation à chacun des torons de torsions primaires à un taux de torsion primaire de 50 à 100 torsions/m ; assemblage des au moins trois torons dotés chacun de torsions primaires ; et dotation aux au moins trois torons de torsions finales à un taux de torsion finale de 120 à 200 torsions/m.

6. Produit de caoutchouc (1) renforcé par le câble de renforcement de caoutchouc (12) selon l'une quelconque des revendications 1 à 4.

7. Produit de caoutchouc (1) selon la revendication 6, étant une courroie en caoutchouc comprenant un caoutchouc de matrice et le câble de renforcement de caoutchouc (12) incorporé dans le caoutchouc de matrice.
